# FASCICULE DE BREVET EUROPEEN

(11) **EP 3 471 969 B1**
(45) Date de publication et mention de la délivrance du brevet: **22.03.2023**
(21) Numéro de dépôt: 17742803.4
(22) Date de dépôt: 20.06.2017
(51) Int. Cl.: B43K 19/00, B43K 19/16, B43K 19/02

(54) **CRAYON A ECRIRE OU A COLORIER**
SCHREIB- ODER FARBSTIFT
WRITING OR COLORING PENCIL

(30) Priorité: 21.06.2016 FR 1655767
(43) Date de publication de la demande: 24.04.2019
(73) Titulaire: Conte, 62200 Boulogne sur Mer (FR)
(72) Inventeur: GOUEREC, Julien, 62200 Boulogne sur Mer (FR); LEFEBVRE, Philippe, 62930 Wimereux (FR)
(74) Mandataire: Cabinet Beau de Loménie
(86) Numéro de dépôt international: PCT/FR2017/051614
(87) Numéro de publication internationale: WO 2017/220914

(56) Documents cités:
- EP-A1- 2 845 747
- JP-A- S5 270 618
- US-A- 5 244 297

## Description

La présente invention concerne les crayons à écrire ou à colorier obtenus par coextrusion comprenant une mine à base de polymère et une matière synthétique de bois.

De tels crayons à écrire ou à colorier sont connus de l'homme du métier. En particulier la demande WO01/43987 indique que ces crayons doivent comprendre une couche protectrice intermédiaire dont le matériau thermoplastique doit avoir un point de solidification inférieur au point de solidification de la matière thermoplastique de la mine afin d'éviter les problèmes de fissuration de la mine lors de son refroidissement.

Toutefois les seuls matériaux de la gaine indiqués sont comme matière thermoplastique un polymère styrénique en mélange avec un thermoplastique élastomère par exemple de type SBS (styrène butadiène styrène) ou un copolymère éthyle-vinyle-acétate (EVA) dans des proportions 95/5 à 70/30 avec un exemple de mélange polymère styrénique/EVA à 80/20 ou 83/15 ou dans le cas du SBS un mélange polymère styrénique /thermoplastique élastomère à 88/10.

Il indique également l'utilisation possible dans la gaine de protection d'une matière thermoplastique à base de thermoplastique élastomère.

Or les inventeurs se sont aperçus de façon surprenante que lorsque l'EVA est remplacé par un copolymère éthylène (alkyle en C₁-C₄) acrylate, en particulier le copolymère éthylène butyle acrylate (EBA), la gaine présente une meilleure adhérence avec la mine, ce qui permet d'éviter dans certains cas, en particulier pour des mines fines, des problèmes de mines filantes et dans tous les cas des risques de décohésion entre la mine et la couche protectrice lors de l'opération de taille, ce qui n'est pas souhaitable. En outre cette bonne adhérence existe quelle que soit le polymère de la mine (polyoléfine ou polymère styrénique).

Aucun des arts antérieurs connus à ce jour ne décrit une telle solution au problème d'adhérence entre la mine à base polymère et la gaine protectrice.

Ainsi, la demande WO2010/006744 décrit également la présence obligatoire d'une couche d'adhésion entre la mine et la matière synthétique de bois pour les crayons dont le polymère de la mine est incompatible avec le polymère de la matière synthétique de bois. Toutefois le matériau indiqué pour cette couche est de préférence un copolymère styrène-butadiène et/ou un copolymère bloc styrène/éthène-butadiène/styrène.

La demande US 2006/0194049 décrit également la présence d'une enveloppe protectrice de la mine qui a une résistance à la flexion supérieure à celle de la mine et qui va donc stabiliser la mine pour éviter qu'elle ne se casse. Toutefois, il est indiqué que la composition de l'enveloppe sera similaire à celle de la mine.

Le brevet US 5 244 297 divulgue également un crayon à écrire ou à colorier comprenant trois couches : une mine non expansée à base de polymère, une couche intermédiaire protectrice non expansée entourant la mine et une matière synthétique de bois expansé entourant la couche intermédiaire protectrice.

Dans ce cas il est indiqué qu'avantageusement, les 3 couches sont à base du même matériau tel qu'un copolymère polystyrène méthacrylate, ce qui permet d'obtenir une très bonne adhérence.

Toutefois les problèmes d'adhérences rencontrés dans le cas où la mine, la couche intermédiaire et la matière synthétique de bois sont à base de polymères différents ne sont pas abordés.

Le problème est que le copolymère polystyrène méthacrylate est incompatible avec les polyoléfines et qu'une couche intermédiaire protectrice à base du copolymère polystyrène méthacrylate ne peut pas être utilisée si la mine est à base d'une polyoléfine.

La demande de brevet JPS5270618, indique la possible présence d'une couche adhésive entre la mine et la gaine, cette couche adhésive pouvant comprendre différents types d'adhésifs possibles, mais insiste sur le fait que l'adhésif préféré est le copolymère EVA qui est ainsi utilisé dans ses exemples de réalisation.

En outre dans ce document la couche adhésive n'est pas extrudée.

La présente invention concerne donc un crayon à écrire ou à colorier comprenant les 3 couches suivantes obtenues par coextrusion :
- une mine non expansée à base de polymère,
- une couche intermédiaire protectrice non expansée entourant la mine et comprenant un copolymère éthylène (alkyle en C₁-C₄) acrylate seul ou en mélange avec un polymère styrénique et
- une matière synthétique de bois expansée à base d'un polymère styrénique entourant la couche intermédiaire protectrice.

Le crayon selon la présente invention comprend donc une mine à base de polymère.

On entend au sens de présente invention par « mine à base de polymère», toute mine de crayon à écrire ou à colorier comprenant au moins un polymère.

Dans un mode de réalisation avantageux, le polymère de la mine est choisi parmi les polymères styréniques et les polyoléfines, en particulier les polyoléfines.

Dans le cas où la mine comprend une polyoléfine, elle sera dénommée dans le cadre de la présente invention « mine à base de polyoléfine ». Ainsi, on entend au sens de présente invention par « mine à base de polyoléfine », toute mine de crayon à écrire ou à colorier comprenant au moins une polyoléfine. De façon avantageuse dans une mine à base de polyoléfine selon l'invention, la polyoléfine est le principal polymère de la mine. De façon encore plus avantageuse la mine à base de polyoléfine ne comprend pas d'autres polymères. Avantageusement la polyoléfine peut-être du polyéthylène ou du polypropylène, en particulier il s'agit du polypropylène, plus particulièrement du polypropylène homopolymère. Dans le cas où la mine comprend un polymère styrénique, elle sera dénommée dans le cadre de la présente invention « mine à base de polymère styrénique ».

Ainsi, on entend au sens de présente invention par « mine à base de polymère styrénique », toute mine de crayon à écrire ou à colorier comprenant au moins un polymère styrénique. De façon avantageuse dans une mine à base de polymère styrénique selon l'invention, le polymère styrénique est le principal polymère de la mine. De façon encore plus avantageuse la mine à base de polymère styrénique ne comprend pas d'autres polymères. Avantageusement le polymère styrénique est du polystyrène (PS), du styrène acrylonitrile (SAN) ou de l'acrylonitrile butadiène styrène (ABS), en particulier de l'acrylonitrile butadiène styrène (ABS).

Ainsi avantageusement le polymère de la mine est choisi parmi l'acrylonitrile butadiène styrène et le polypropylène.

De façon avantageuse la teneur en polymère, en particulier en polymère styrénique ou polyoléfine, de la mine est comprise entre 15 et 45 % en poids par rapport au poids total de la composition de la mine, avantageusement entre 25 et 40 % en poids par rapport au poids total de la composition de la mine.

La mine selon la présente invention peut être une mine de crayon à papier ou une mine de crayon de couleurs.

Dans le cas où la mine à base de polymère selon la présente invention est une mine de crayon de papier, elle peut comprendre une teneur en polymère, en particulier en polymère styrénique ou polyoléfine, comprise entre 15 et 40 % en poids, avantageusement entre 20 et 35 % en poids, par rapport au poids total de la composition de la mine.

Dans le cas où la mine selon la présente invention est une mine de crayon de couleur elle peut comprendre une teneur en polymère, en particulier en polymère styrénique ou polyoléfine, comprise entre 25 et 45 % en poids, avantageusement entre 30 et 40 % en poids, par rapport au poids total de la composition de la mine.

La mine selon la présente invention peut comprendre également des charges minérales, des pigments, des plastifiants et/ou des additifs. Avantageusement, la mine à base de polyoléfine ne comprend pas de plastifiant.

Avantageusement la teneur en pigments de la mine est comprise entre 5 et 30 % en poids, la teneur en charge minérale entre 5 et 75 % en poids et/ou la teneur en additifs et/ou plastifiants entre 0 et 50 % en poids, par rapport au poids total de la composition de la mine.

Dans le cas où la mine selon la présente invention est une mine de crayon de papier, elle peut comprendre du graphite et éventuellement une charge minérale incolore. En particulier elle comprend du graphite et une charge minérale incolore. Avantageusement la charge minérale incolore est choisie parmi une argile, du talc, du nitrure de bore, de la silice, du carbonate de calcium, du mica, de la poudre de stéatite et leurs mélanges. De façon particulièrement avantageuse il s'agit d'une charge lamellaire, plus particulièrement choisie parmi une argile, du nitrure de bore, du mica et/ou du talc, par exemple une argile, en particulier choisie parmi la Montmorillonite, la bentonite le kaolin. Avantageusement il s'agit du kaolin.

De façon avantageuse la teneur en graphite de la mine de crayon à papier selon la présente invention est comprise entre 40 et 60%, en particulier entre 44 et 50%, en poids par rapport au poids total de la composition de la mine.

Avantageusement la teneur en charge minérale incolore de la mine de crayon à papier selon la présente invention est comprise entre 5 et 15%, en particulier entre 6 et 10%, en poids par rapport au poids total de la composition de la mine.

Elle peut en outre comprendre en tant que pigment du noir de carbone.

Avantageusement la teneur en noir de carbone de la mine de crayon à papier selon la présente invention est comprise entre 5 et 20%, en particulier entre 5 et 15%, en poids par rapport au poids total de la composition de la mine.

Dans le cas où la mine selon la présente invention est une mine de crayon de couleur, la charge minérale est une charge minérale incolore, en particulier telle que décrite ci-dessus.

Avantageusement la teneur en charge minérale incolore de la mine de crayon de couleur selon la présente invention est comprise entre 5 et 50%, en particulier entre 10 et 40%, en poids par rapport au poids total de la composition de la mine.

Les additifs utilisables dans la mine selon la présente invention peuvent être choisis parmi les agents glissants, les agents de mise en oeuvre, les agents de couplage, les agents dispersants, les lubrifiants et les autres additifs bien connus de l'homme du métier. Par exemple il peut s'agir de stéarate (stéarate de zinc, de calcium, de magnésium, de sodium et leurs mélanges, en particulier du stéarate de calcium), de cires, de paraffines, d'acides gras, d'amides telle qu'une stéaramide, en particulier l'éthylène bis stéaramide, de glycérol et de ses dérivés tel que le dibéhénate de glycérol, le béhénate de glycérol, le stéarate de glycérol et/ou le diisostéarate de polyglycérol, de siloxane greffé sur du polypropylène et de leurs mélanges, en particulier il s'agit du stéarate de calcium, du stéarate de magnésium, du stéarate de zinc, des amides ou de leur mélange.

La mine selon la présente invention est non expansée. Ainsi donc aucun agent d'expansion n'est utilisé lors de son procédé de fabrication. En outre le polymère utilisé n'est pas expansé.

Dans un mode de réalisation particulier de la présente invention, la mine a un diamètre compris entre 2 et 3,8 mm.

En particulier dans le cas des mines fines, la mine a un diamètre compris entre 2 et 2,3 mm.

Dans ce cas, avantageusement, dans le cas des couches intermédiaires protectrices épaisses, le ratio épaisseur de la couche intermédiaire protectrice / rayon de la mine est compris entre 0,05 et 0,16, avantageusement entre 0,06 et 0,15, plus avantageusement entre 0,07 et 0,15.

Dans le cas des mines épaisses, la mine a un diamètre compris entre 3 et 3,8 mm et des mines très épaisses, la mine a un diamètre compris entre 3,4 et 3,8 mm. Dans ce cas, avantageusement dans le cas des couches intermédiaires protectrices épaisses, le ratio épaisseur de la couche intermédiaire protectrice / rayon de la mine est compris entre 0,07 et 0,16, avantageusement entre 0,08 et 0,15, plus avantageusement entre 0,09 et 0,15.

La mine selon la présente invention doit donc comporter des charges et pigments pour l'écriture facilement transférables sur le support d'écriture ou des pigments de coloriage pour avoir un bon pouvoir couvrant.

Avantageusement la mine selon la présente invention peut avoir une section hexagonale, ronde ou triangulaire, avantageusement ronde ou hexagonale.

Le crayon selon la présente invention comprend une couche intermédiaire protectrice non expansée entourant, avantageusement de façon concentrique, la mine et comprenant un copolymère éthylène (alkyle en C₁-C₄) acrylate seul ou en mélange avec un polymère styrénique. Cette couche intermédiaire a un double rôle :
Tout d'abord elle va permettre d'assurer l'adhésion entre la mine à base de polymère, en particulier à base de polyoléfine, et la matière synthétique de bois à base d'un polymère styrénique.

Elle va également permettre de compenser le retrait de la mine lors de l'étape de refroidissement après l'étape de coextrusion, ce qui va éviter les problèmes de fissuration de la mine.

Cette couche intermédiaire protectrice va donc séparer totalement la mine de la matière synthétique de bois.

Dans un mode de réalisation avantageux, la couche intermédiaire protectrice a une épaisseur comprise entre 0,05 et 0,31 mm, plus avantageusement entre 0,07 et 0,27 mm, en particulier entre 0,08 et 0,17 mm, très avantageusement entre 0,07 et 0,09 mm.

En particulier dans le cas des mines pour crayon de couleur, la couche intermédiaire protectrice a avantageusement une épaisseur comprise entre 0,05 et 0,10 mm, avantageusement entre 0,06 et 0,09 mm, en particulier entre 0,07 et 0,09 mm.

Avantageusement dans ce cas la couche intermédiaire protectrice est de la même couleur que la matière bois ou que la mine, en particulier que la matière bois, et est donc invisible.

Dans le cas des mines pour crayon à papier, la couche intermédiaire protectrice a avantageusement une épaisseur comprise entre 0,11 et 0,31 mm, plus avantageusement entre 0,13 et 0,27 mm, en particulier entre 0,14 et 0,17 mm.

Avantageusement dans ce cas la couche intermédiaire protectrice a une couleur différente de celle de la matière bois ou de celle de la mine et est donc visible.

La couche intermédiaire protectrice peut également être de faible épaisseur et présenter ainsi une épaisseur comprise entre 0,05 et 0,10 mm, avantageusement entre 0,06 et 0,09 mm, en particulier entre 0,07 et 0,09 mm.

Avantageusement dans ce cas la couche intermédiaire protectrice est de la même couleur que la matière bois ou que la mine, en particulier que la matière bois, et est donc invisible.

La couche intermédiaire protectrice selon la présente invention comprend un copolymère éthylène (alkyle en C₁-C₄) acrylate seul ou en mélange avec un polymère styrénique, avantageusement elle est constituée par un copolymère éthylène (alkyle en C₁-C₄) acrylate seul ou en mélange avec un polymère styrénique, en particulier en mélange avec un polymère styrénique.

On entend au sens de la présente invention par « alkyle en C₁-C₄», tout groupe alkyle linéaire ou ramifié ayant entre 1 et 4 atomes de carbones, tel que par exemple le groupe méthyle, éthyle, propyle, n-propyle, isopropyle, butyle, n-butyle, ter-butyle, isobutyle. De façon avantageuse, il s'agit d'un groupe méthyle, éthyle, butyle, n-butyle, isobutyle ou ter-butyle, en particulier un groupe butyle, n-butyle, isobutyle ou ter-butyle, plus particulièrement un groupe n-butyle.

De façon avantageuse, le copolymère éthylène (alkyle en C₁-C₄) acrylate est choisi parmi le copolymère éthylène méthyle acrylate, le copolymère éthylène éthyle acrylate et le copolymère éthylène butyle acrylate, en particulier il s'agit du copolymère éthylène butyle acrylate, tel que le copolymère éthylène n-butyle acrylate.

De façon avantageuse le polymère styrénique est du styrène acrylonitrile du polystyrène ou de l'acrylonitrile butadiène styrène (ABS), en particulier du polystyrène ou de l'acrylonitrile butadiène styrène, plus particulièrement du polystyrène. En particulier le polystyrène est un polystyrène atactique. Il peut s'agir d'un polystyrène cristal.

Ainsi avantageusement, la couche intermédiaire protectrice non expansée entourant la mine comprend du copolymère éthylène butyle acrylate en mélange avec du polystyrène ou de l'acrylonitrile butadiène styrène (ABS). Dans le cadre de la présente invention, le polymère styrénique a pour but de permettre l'adhésion entre la couche intermédiaire protectrice et la matière synthétique de bois ainsi que de permettre la bonne tenue mécanique de cette couche (résistance au taillage sans s'effilocher), surtout dans le cas des gaines ayant une forte épaisseur (telle qu'une épaisseur comprise entre 0,11 et 0,31 mm, plus avantageusement entre 0,13 et 0,27 mm, en particulier entre 0,14 et 0,17 mm), mais est également intéressant dans le cas des gaines de faible épaisseur (telle qu'une épaisseur comprise entre 0,05 et 0,10 mm, avantageusement entre 0,06 et 0,09 mm, en particulier entre 0,07 et 0,09 mm). Il peut également avoir pour but, dans le cas où la mine est à base de polymère styrénique, de compatibiliser la gaine avec la mine.

De façon avantageuse le copolymère éthylène (alkyle en C₁-C₄) acrylate comprend entre 10 et 40% en poids du comonomère (alkyle en C₁-C₄) acrylate, en particulier entre 15 et 30% en poids, par rapport au poids total du copolymère éthylène (alkyle en C₁-C₄) acrylate.

Ainsi avantageusement, lorsque le copolymère éthylène (alkyle en C₁-C₄) acrylate est le copolymère éthylène butyle acrylate, ce dernier comprend entre 10 et 40% en poids du comonomère butyle acrylate, en particulier entre 15 et 30% en poids, par rapport au poids total du copolymère éthylène butyle acrylate

Dans le cadre de la présente invention, le copolymère éthylène (alkyle en C₁-C₄) acrylate, en particulier le copolymère éthylène butyle acrylate a pour but de permettre l'adhésion entre la couche intermédiaire protectrice et la mine et de diminuer le point de solidification (appelé couramment point de ramollissement) de la gaine protectrice intermédiaire, en particulier du polymère styrénique lorsqu'il est présent, tel que le polystyrène, le styrène acrylonitrile ou l'acrylonitrile butadiène styrène (ABS), de façon à ce que le point de solidification de la gaine, en particulier du mélange polymère styrénique et copolymère éthylène (alkyle en C₁-C₄) acrylate soit inférieur au point de solidification du polymère (avantageusement ABS ou polypropylène) de la mine.

Dans un mode de réalisation avantageux, la teneur en copolymère éthylène (alkyle en C₁-C₄) acrylate de la gaine est comprise entre 20 et 100% en poids, avantageusement entre 25 et 60% en poids, plus avantageusement entre 30 et 55% en poids, par rapport au poids total de la composition de la gaine (100 % correspond à une couche intermédiaire protectrice constituée par du copolymère éthylène (alkyle en C₁-C₄) acrylate).

En particulier, lorsque la gaine comprend un mélange de copolymère éthylène (alkyle en C₁-C₄) acrylate avec un polymère styrénique, la teneur du mélange de la couche intermédiaire protectrice est comprise entre 85 et 100 % en poids par rapport au poids total de la couche intermédiaire protectrice (100 % correspond à une couche intermédiaire protectrice constituée par un mélange de copolymère éthylène (alkyle en C₁-C₄) acrylate avec un polymère styrénique), avantageusement entre 90 et 97 % en poids par rapport au poids total de la couche intermédiaire protectrice, plus avantageusement entre 93 et 96% en poids par rapport au poids total de la couche intermédiaire protectrice.

La couche intermédiaire protectrice peut comprendre en outre des pigments, tels qu'un mélange maitre, en particulier à base de polystyrène, qui servent en particulier à apporter de la couleur à cette couche.

Avantageusement, la teneur en pigments de cette couche est comprise entre 3 et 10 % en poids par rapport au poids total de la couche intermédiaire protectrice, plus avantageusement entre 4 et 7 % en poids par rapport au poids total de la couche intermédiaire protectrice.

Dans un mode de réalisation particulier la couche intermédiaire protectrice a une couleur différente de la mine et de la matière synthétique de bois. Ceci permet donc à cette couche d'être visible pour le consommateur, ce qui peut avoir un intérêt esthétique et permet de jouer avec les différentes couleurs pour rendre le crayon très distinctif et attractif.

Dans un autre mode réalisation avantageux, cette couche à la même couleur que celle de la mine, ce qui permet de donner au consommateur l'impression que le crayon a une mine plus épaisse ou de cacher la présence de cette gaine.

Dans encore un autre mode de réalisation avantageux, cette couche a la même couleur que celle de la matière synthétique de bois, ce qui permet de cacher la présence de cette gaine et donc de la rendre invisible. Avantageusement la teneur en polymère styrénique, lorsqu'il est présent, en particulier en polystyrène ou en acrylonitrile butadiène styrène (ABS), plus particulièrement en polystyrène, de la couche intermédiaire protectrice est comprise entre 25 et 90% en poids, plus avantageusement entre 30 et 75% en poids, encore plus avantageusement entre 35 et 70 % en poids, par rapport au poids total de la couche intermédiaire protectrice.

Par ailleurs la couche intermédiaire protectrice est non expansée. Ainsi donc aucun agent d'expansion n'est utilisé lors de son procédé de fabrication. En outre le polymère styrénique utilisé n'est pas expansé.

De plus, avantageusement la couche intermédiaire protectrice n'a pas une résistance à la flexion supérieure à celle de la mine.

En outre, avantageusement la couche intermédiaire protectrice n'a pas la même fonction que la mine, c'est-à-dire n'est pas destinée à écrire ou à colorier. Les pigments éventuellement présents dans cette couche ne sont donc pas transférables facilement sur le support d'écriture et n'ont donc pas un bon pouvoir couvrant.

Elle a avantageusement en revanche une température de fusion égale ou inférieure à la fois à celle de la mine et à celle de la matière synthétique de bois.

Dans un mode de réalisation avantageux, la couche intermédiaire protectrice a une épaisseur comprise entre 0,11 et 0,31 mm, avantageusement entre 0,13 et 0,27 mm, en particulier entre 0,14 et 0,17mm.

Dans ce cas, avantageusement, la teneur en copolymère éthylène (alkyle en C₁-C₄) acrylate de la gaine est comprise entre 25 et 50% en poids, avantageusement entre 30 et 40% en poids, par rapport au poids total de la composition de la gaine.

Avantageusement dans ce cas la couche intermédiaire protectrice a une couleur différente de celle de la matière bois ou de celle de la mine et est donc visible.

C'est en particulier le cas des couches intermédiaires protectrices pour crayon à papier selon l'invention.

Dans un autre mode de réalisation avantageux, la couche intermédiaire protectrice a une épaisseur comprise entre 0,05 et 0,10 mm, avantageusement entre 0,06 et 0,09 mm, en particulier entre 0,07 et 0,09mm.

Dans ce cas, avantageusement, la teneur en copolymère éthylène (alkyle en C₁-C₄) acrylate de la gaine est comprise entre 25 et 100% en poids, avantageusement entre 35 et 60% en poids, plus avantageusement entre 45 et 55% en poids, par rapport au poids total de la composition de la gaine.

En particulier avantageusement dans ce cas la couche intermédiaire protectrice est de la même couleur que la matière bois ou que la mine, en particulier que la matière bois, et est donc invisible.

C'est en particulier le cas des couches intermédiaires protectrices pour crayon de couleur selon l'invention.

Dans un autre mode de réalisation avantageux, la couche intermédiaire protectrice a une épaisseur comprise entre 0,05 et 0,10 mm, avantageusement entre 0,06 et 0,09 mm, en particulier entre 0,07 et 0,09mm et la teneur en copolymère éthylène (alkyle en C₁-C₄) acrylate de la gaine est comprise entre 25 et 50% en poids, avantageusement entre 30 et 40% en poids, par rapport au poids total de la composition de la gaine. En particulier avantageusement dans ce cas la couche intermédiaire protectrice est de la même couleur que la matière bois ou que la mine, en particulier que la matière bois, et est donc invisible.

C'est en particulier le cas des couches intermédiaires protectrices pour crayon à papier selon l'invention.

Le crayon selon la présente invention comprend en outre une matière synthétique de bois expansée à base de polymère styrénique et entourant, avantageusement de façon concentrique, la couche intermédiaire protectrice.

On entend au sens de présente invention par «matière synthétique de bois », toute matière synthétique de crayon à écrire ou à colorier à base de polymère dont la densité et la taillabilité se rapprochent de celles du bois.

On entend au sens de présente invention par «matière synthétique de bois à base de polymère styrénique», toute matière synthétique de bois telle que définie ci-dessus comprenant au moins un polymère styrénique, c'est-à-dire un polymère ou copolymère à base de styrène. De façon avantageuse le polymère styrénique est le principal polymère de la matière synthétique de bois. De façon encore plus avantageuse la matière synthétique de bois ne comprend pas d'autres polymères. Avantageusement le polymère styrénique peut-être du polystyrène, de l'ABS (acrylonitrile - butadiène - styrène) ou un copolymère polystyrène méthacrylate, en particulier il s'agit du polystyrène, plus particulièrement du polystyrène atactique.

De façon avantageuse la teneur en polymère styrénique, en particulier en polystyrène, de la matière synthétique de bois est comprise entre 60 et 100 % en poids, avantageusement entre 70 et 98 % en poids, en particulier entre 80 et 95% en poids, par rapport au poids total de la matière synthétique de bois.

La matière synthétique de bois peut contenir, outre le polymère styrénique, des pigments (quelques % en poids, en particulier entre 0 et 5% en poids, avantageusement entre 0,5 et 2% en poids, par rapport au poids total de la composition de la matière synthétique de bois), tels qu'un mélange maître et/ou de l'oxyde de fer rouge, en particulier pour conférer une couleur proche du bois à la matière synthétique de bois, des plastifiants, de la sciure de bois, des charges minérales (quelques % en poids, avantageusement entre 0 et 10% en poids, en particulier entre 2 et 6% en poids, plus particulièrement entre 3 et 5% en poids, par rapport au poids total de la composition de la matière synthétique de bois), en particulier incolores tels que des argiles, par exemple du kaolin, et/ou d'autres additifs tels que le stéarate de calcium et/ou une stéaramide (quelques % en poids, avantageusement entre 0 et 5% en poids, en particulier entre 1 et 3% en poids, par rapport au poids total de la composition de la matière synthétique de bois).

La matière synthétique de bois est expansée de façon à obtenir une densité proche de celle du bois. Pour obtenir une matière synthétique de bois expansée, avantageusement un agent expansant, tel que par exemple de l'azo-dicarbonamide, a été ajouté à la composition de la matière synthétique de bois avant l'extrusion.

Les trois couches pouvant être obtenues par coextrusion, le crayon selon la présente invention peut être fabriqué par un procédé en continu. En particulier ce procédé est tel que décrit dans la demande WO01/43987.

L'ensemble du crayon selon la présente invention doit avoir une bonne taillabilité et une densité proche de celle du crayon traditionnel en bois.

Dans un mode de réalisation particulier de la présente invention, le crayon à écrire ou à colorier selon l'invention comprend une couche supplémentaire de décoration, avantageusement de vernis, entourant, en particulier de façon concentrique, la matière synthétique de bois. Avantageusement la couche de décoration est réalisée dans un matériau compatible avec celui de la matière synthétique de bois.

Avantageusement le crayon à écrire ou à colorier selon la présente invention peut avoir une section hexagonale, ronde ou triangulaire, avantageusement ronde ou hexagonale.

Da façon avantageuse, il peut comporter un moyen pour effacer, telle qu'une gomme, à l'extrémité non taillée du crayon.

L'invention sera mieux comprise à la lecture de la description des figures et des exemples qui suivent.

La figure 1 représente une section transversale d'un exemple de crayon à papier à section hexagonale selon l'invention.

La figure 2 représente une vue en perspective de l'exemple de crayon à papier à section hexagonale selon l'invention.

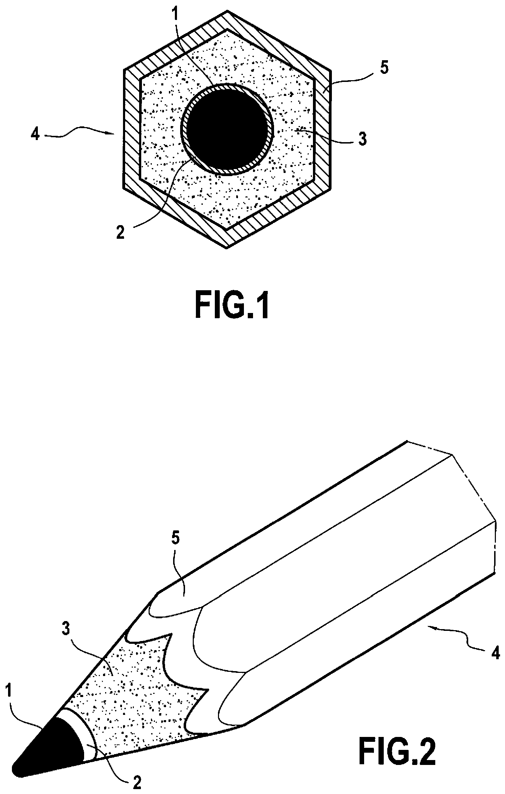

L'exemple de crayon à papier de section hexagonale 4 selon l'invention représenté sur les figures 1 et 2 comprend donc quatre couches, la mine (1) de section circulaire, la couche intermédiaire protectrice (2) de section circulaire qui entoure de façon concentrique la mine (1) ,la matière synthétique de bois expansée (3) de section hexagonale qui entoure de façon concentrique la couche intermédiaire protectrice et une couche de décoration (5) de section hexagonale qui entoure de façon concentrique la matière synthétique de bois.

La couche intermédiaire protectrice 2 a une couleur différente de la mine et de la matière synthétique bois et est donc visible à la fois sur la section transversale du crayon (figure 1) mais également sur la partie taillée du crayon (figure 2).

### Exemple 1 : mine à base polyoléfine

Un crayon à papier de section hexagonale comme illustrée dans les figures 1 et 2 ou de section triangulaire selon l'invention a été fabriqué par coextrusion.

Les compositions des différentes couches sont les suivantes :
- mine: polypropylène (PP, 25-35%), graphite (40-50%) + additifs/pigments
- couche intermédiaire protectrice: polystyrène ou ABS (50-70%), Ethylène butyle acrylate (EBA) (30-50%) + pigments
- matière synthétique de bois (3) : polystyrène (90-95%) + additifs/pigments/charge minérale incolore

L'épaisseur de la couche intermédiaire protectrice est de 0,15mm et celle de la mine de 2,3mm.

Un contrôle visuel est effectué après l'étape d'aiguisage du crayon.

On observe une bonne adhésion et une très bonne taillabilité.

Si on compare ce crayon avec un crayon obtenu dans les mêmes conditions mais avec une gaine comprenant : polystyrène ou ABS (60-80%), EVA (20-40%) + pigments, on observe une meilleure adhésion de la gaine avec la mine dans le crayon selon la présente invention.

### Exemple 2 : mine à base polyoléfine

Un crayon à papier de section hexagonale comme illustrée dans les figures 1 et 2 ou de section triangulaire selon l'invention a été fabriqué par coextrusion.

Les compositions des différentes couches sont les suivantes :
- mine: polypropylène (PP, 25-35%), graphite (40-50%) + additifs/pigments
- couche intermédiaire protectrice: polystyrène (60%), Ethylène butyle acrylate (EBA) (35%) + mélange-maître (5%)
- matière synthétique de bois (3) : polystyrène (90-95%) + additifs/pigments/charge minérale incolore

L'épaisseur de la couche intermédiaire protectrice est comprise entre 0,07 et 0,09 et celle de la mine est de 2,3mm.

Un contrôle visuel est effectué après l'étape d'aiguisage du crayon.

On observe une bonne adhésion et une très bonne taillabilité.

Si on compare ce crayon avec un crayon obtenu dans les mêmes conditions mais avec une gaine comprenant : polystyrène (60%), EVA (35%) + + mélange-maître (5%), on observe une meilleure adhésion de la gaine avec la mine dans le crayon selon la présente invention, même si la gaine a une très faible épaisseur.

### Exemple 3 : mine à base de polymère styrénique

Un crayon de couleur de section hexagonale comme illustrée dans les figures 1 et 2 ou de section triangulaire selon l'invention a été fabriqué par coextrusion.

Les compositions des différentes couches sont les suivantes :
- mine: ABS (35-40%), kaolin (10-15%), Stéarate de Calcium (25-30%)+ additifs/ Plastifiant/ pigments (20-30%).
- couche intermédiaire protectrice: ABS (40-60%), Ethylène butyle acrylate (EBA) (40-60%) + pigments
- matière synthétique de bois (3) : polystyrène (90-95%) + additifs/pigments/charge minérale incolore

L'épaisseur de la couche intermédiaire protectrice est de 0,08mm et celle de la mine de 3,2mm.

Ce crayon est comparé avec un crayon obtenu dans les mêmes conditions mais avec une gaine comprenant : polystyrène (40-60%), EVA (40-60%) + pigments dans un test de mine filante.

Ce test sert à vérifier que la mine ne se désolidarise pas de la matière bois.
EQUIPEMENTDU TEST :
   - Dynamomètre TCM 201M CHATILLON AMETEK ou équivalent
   - Capteur de force.
ECHANTILLON UTILISER DANS LE TEST:
   - 50 crayons à t= 0
   - 10 crayons minimum après un cycle, 24h à 0°C, 24h à 40°C. Pendant 21 jours.
MODE OPERATOIRE DU TEST:
   - L'ensemble est positionné verticalement dans un support et descend à 50 mm/mn pour entrer en contact avec une plaque métallique
RESULTATS DU TEST:
   - Le résultat est la mesure de la force nécessaire pour enfoncer la mine, exprimée en dAN.

Aucune mine n'est considérée comme filante si la valeur est supérieure à 4 dAN.

Le crayon selon la présente invention ne présente pas de mine filante sur tous les échantillons testés.

En revanche, le crayon comparatif avec la gaine à base d'EVA a un taux de mines qui ont filé de 30% environ dont la moitié à une valeur inférieure à 4 dAN les considérant comme filante.

Le crayon selon la présente invention avec une gaine comprenant de l'EBA à la place de l'EVA présente donc une meilleure adhésion entre la mine et la matière bois, ce qui évitera les éventuels problèmes de décohésion lors de l'opération de taille du crayon

## Revendications

1. Crayon à écrire ou à colorier comprenant les 3 couches suivantes obtenues par coextrusion :
- une mine non expansée à base de polymère,
- une couche intermédiaire protectrice non expansée entourant la mine et comprenant un copolymère éthylène (alkyle en C₁-C₄) acrylate seul ou en mélange avec un polymère styrénique et
- une matière synthétique de bois expansée à base d'un polymère styrénique entourant la couche intermédiaire protectrice.

2. Crayon à écrire ou à colorier selon la revendication 1, **caractérisé en ce que** le copolymère éthylène (alkyle en C₁-C₄) acrylate est choisi parmi le copolymère éthylène méthyle acrylate, le copolymère éthylène éthyle acrylate et le copolymère éthylène butyle acrylate.

3. Crayon à écrire ou à colorier selon l'une quelconque des revendications 1 ou 2, **caractérisé en ce que** le copolymère éthylène (alkyle en C₁-C₄) acrylate est le copolymère éthylène butyle acrylate.

4. Crayon à écrire ou à colorier selon l'une quelconque des revendications 1 à 3, **caractérisé en ce que** la teneur en copolymère éthylène (alkyle en C₁-C₄) acrylate de la gaine est comprise entre 20 et 100% en poids, avantageusement entre 25 et 60% en poids, plus avantageusement entre 30 et 55% en poids, par rapport au poids total de la composition de la gaine.

5. Crayon à écrire ou à colorier selon l'une quelconque des revendications 1 à 4, **caractérisé en ce que** le polymère de la mine est choisi parmi les polymères styréniques et les polyoléfines, avantageusement parmi l'acrylonitrile butadiène styrène et le polypropylène.

6. Crayon à écrire ou à colorier selon l'une quelconque des revendications 1 à 5, **caractérisé en ce que** la couche intermédiaire protectrice a une épaisseur comprise entre 0,11 et 0,31 mm, avantageusement entre 0,13 et 0,27 mm, en particulier entre 0,14 et 0,17mm.

7. Crayon à écrire ou à colorier selon l'une quelconque des revendications 1 à 5, **caractérisé en ce que** la couche intermédiaire protectrice a une épaisseur comprise entre 0,05 et 0,10 mm, avantageusement entre 0,06 et 0,09 mm, en particulier entre 0,07 et 0,09mm.

8. Crayon à écrire ou à colorier selon l'une quelconque des revendications 6 ou 7, **caractérisé en ce que** la teneur en copolymère éthylène (alkyle en C₁-C₄) acrylate de la gaine est comprise entre 25 et 50% en poids, avantageusement entre 30 et 40% en poids, par rapport au poids total de la composition de la gaine.

9. Crayon à écrire ou à colorier selon la revendication 7, **caractérisé en ce que** la teneur en copolymère éthylène (alkyle en C₁-C₄) acrylate de la gaine est comprise entre 25 et 100% en poids, avantageusement entre 45 et 55% en poids, par rapport au poids total de la composition de la gaine.

10. Crayon à écrire ou à colorier selon l'une quelconque des revendications 1 à 9, **caractérisé en ce que** la mine a un diamètre compris entre 2 et 3,8 mm.

11. Crayon à écrire ou à colorier selon l'une quelconque des revendications 1 à 10, **caractérisé en ce que** la couche intermédiaire protectrice a une couleur différente de la mine et de la matière synthétique de bois ou a la même couleur que celle de la mine ou que celle de la matière synthétique de bois.

12. Crayon à écrire ou à colorier selon l'une quelconque des revendications 1 à 11, **caractérisé en ce que** le polymère styrénique de la matière synthétique de bois est du polystyrène.

13. Crayon à écrire ou à colorier selon l'une quelconque des revendications 1 à 12, **caractérisé en ce qu'**il s'agit d'un crayon à papier et **en ce que** la mine comprend du graphite.

14. Crayon à écrire ou à colorier selon l'une quelconque des revendications 1 à 12, **caractérisé en ce qu'**il s'agit d'un crayon de couleur.

15. Crayon à écrire ou à colorier selon l'une quelconque des revendications 1 à 14, **caractérisé en ce qu'**il comprend une couche supplémentaire de décoration, avantageusement de vernis, entourant, avantageusement de façon concentrique, la matière synthétique de bois.

## Patentansprüche

1. Schreib- oder Farbstift, umfassend die 3 folgenden Schichten, die durch Koextrusion erhalten werden:
- eine nicht geschäumte Mine auf Polymerbasis,
- eine nicht geschäumte schützende Zwischenschicht, die die Mine umgibt und umfassend ein Ethylen-(C₁-C₄-Alkyl)acrylatcopolymer allein oder in einer Mischung mit einem Styrolpolymer, und
- einen geschäumten Holzkunststoff auf Basis eines Styrolpolymers, der die schützende Zwischenschicht umgibt.

2. Schreib- oder Farbstift nach Anspruch 1, **dadurch gekennzeichnet, dass** das Ethylen-(C₁-C₄-Alkyl)acrylatcopolymer aus Ethylen-Methylacrylatcopolymer, Ethylen-Ethylacrylatcopolymer und Ethylen-Butylacrylatcopolymer ausgewählt ist.

3. Schreib- oder Farbstift nach einem der Ansprüche 1 oder 2, **dadurch gekennzeichnet, dass** das Ethylen-(C₁-C₄-Alkyl)acrylatcopolymer das Ethylen-Butylacrylatcopolymer ist.

4. Schreib- oder Farbstift nach einem der Ansprüche 1 bis 3, **dadurch gekennzeichnet, dass** der Gehalt an Ethylen-(C₁-C₄-Alkyl)acrylatcopolymer der Hülle bezogen auf das Gesamtgewicht der Zusammensetzung der Hülle zwischen 20 und 100 Gew.-%, vorteilhafterweise zwischen 25 und 60 Gew.-%, noch vorteilhafterweise zwischen 30 und 55 Gew.-% beträgt.

5. Schreib- oder Farbstift nach einem der Ansprüche 1 bis 4, **dadurch gekennzeichnet, dass** das Polymer der Mine aus Styrolpolymeren und Polyolefinen, vorteilhafterweise aus Acrylnitrilbutadienstyrol und Polypropylen ausgewählt ist.

6. Schreib- oder Farbstift nach einem der Ansprüche 1 bis 5, **dadurch gekennzeichnet, dass** die schützende Zwischenschicht eine Dicke zwischen 0,11 und 0,31 mm, vorteilhafterweise zwischen 0,13 und 0,27 mm, insbesondere zwischen 0,14 und 0,17 mm aufweist.

7. Schreib- oder Farbstift nach einem der Ansprüche 1 bis 5, **dadurch gekennzeichnet, dass** die schützende Zwischenschicht eine Dicke zwischen 0,05 und 0,10 mm, vorteilhafterweise zwischen 0,06 und 0,09 mm, insbesondere zwischen 0,07 und 0,09 mm aufweist.

8. Schreib- oder Farbstift nach einem der Ansprüche 6 oder 7, **dadurch gekennzeichnet, dass** der Gehalt an Ethylen-(C₁-C₄-Alkyl)acrylatcopolymer der Hülle bezogen auf das Gesamtgewicht der Zusammensetzung der Hülle zwischen 25 und 50 Gew.-%, vorteilhafterweise zwischen 30 und 40 Gew.-% beträgt.

9. Schreib- oder Farbstift nach Anspruch 7, **dadurch gekennzeichnet, dass** der Gehalt an Ethylen-(C₁-C₄-Alkyl)acrylatcopolymer der Hülle bezogen auf das Gesamtgewicht der Zusammensetzung der Hülle zwischen 25 und 100 Gew.-%, vorteilhafterweise zwischen 45 und 55 Gew.-% beträgt.

10. Schreib- oder Farbstift nach einem der Ansprüche 1 bis 9, **dadurch gekennzeichnet, dass** die Mine einen Durchmesser zwischen 2 und 3,8 mm aufweist.

11. Schreib- oder Farbstift nach einem der Ansprüche 1 bis 10, **dadurch gekennzeichnet, dass** die schützende Zwischenschicht eine andere Farbe als die Mine und der Holzkunststoff oder die gleiche Farbe wie die der Mine oder die des Holzkunststoffes aufweist.

12. Schreib- oder Farbstift nach einem der Ansprüche 1 bis 11, **dadurch gekennzeichnet, dass** das Styrolpolymer des Holzkunststoffs Polystyrol ist.

13. Schreib- oder Farbstift nach einem der Ansprüche 1 bis 12, **dadurch gekennzeichnet, dass** es sich um einen Bleistift handelt und dass die Mine Graphit umfasst.

14. Schreib- oder Farbstift nach einem der Ansprüche 1 bis 12, **dadurch gekennzeichnet, dass** es sich um einen Farbstift handelt.

15. Schreib- oder Farbstift nach einem der Ansprüche 1 bis 14, **dadurch gekennzeichnet, dass** er eine zusätzliche Dekorationsschicht, vorteilhafterweise aus Lack, aufweist, die den Holzkunststoff vorteilhafterweise konzentrisch umgibt.

## Claims

1. A writing or coloring pencil comprising the following 3 layers obtained by coextrusion:
- an unexpanded polymer-based lead,
- an unexpanded protective intermediate layer surrounding the lead and comprising an ethylene (C₁₋C₄ alkyl) acrylate copolymer alone or mixed with a styrene polymer and
- an expanded styrene-polymer-based synthetic wood material surrounding the protective intermediate layer.

2. The writing or coloring pencil according to claim 1, **characterized in that** the ethylene (C₁-C₄ alkyl) acrylate copolymer is selected from ethylene methyl acrylate copolymer, ethylene ethyl acrylate copolymer and ethylene butyl acrylate copolymer.

3. The writing or coloring pencil according to either claim 1 or claim 2, **characterized in that** the ethylene (C₁₋C₄ alkyl) acrylate copolymer is ethylene butyl acrylate copolymer.

4. The writing or coloring pencil according to any of claims 1 to 3, **characterized in that** the ethylene (C₁₋C₄ alkyl) acrylate copolymer content in the sheath is between 20 and 100 wt.%, advantageously between 25 and 60 wt.%, more advantageously between 30 and 55 wt.%, relative to the total weight of the composition of the sheath.

5. The writing or coloring pencil according to any of claims 1 to 4, **characterized in that** the polymer of the lead is selected from styrene polymers and polyolefins, advantageously from acrylonitrile butadiene styrene and polypropylene.

6. The writing or coloring pencil according to any of claims 1 to 5, **characterized in that** the protective intermediate layer has a thickness of between 0.11 and 0.31 mm, advantageously between 0.13 and 0.27 mm, in particular between 0.14 and 0.17 mm.

7. The writing or coloring pencil according to any of claims 1 to 5, **characterized in that** the protective intermediate layer has a thickness of between 0.05 and 0.10 mm, advantageously between 0.06 and 0.09 mm, in particular between 0.07 and 0.09 mm.

8. The writing or coloring pencil according to either claim 6 or claim 7, **characterized in that** the ethylene (C₁₋C₄ alkyl) acrylate copolymer content in the sheath is between 25 and 50 wt.%, advantageously between 30 and 40 wt.%, relative to the total weight of the composition of the sheath.

9. The writing or coloring pencil according to claim 7, **characterized in that** the ethylene (C₁-C₄ alkyl) acrylate copolymer content in the sheath is between 25 and 100 wt.%, advantageously between 45 and 55 wt.%, relative to the total weight of the composition of the sheath.

10. The writing or coloring pencil according to any of claims 1 to 9, **characterized in that** the lead has a diameter of between 2 and 3.8 mm.

11. The writing or coloring pencil according to any of claims 1 to 10, **characterized in that** the protective intermediate layer has a different color from the lead and the synthetic wood material or has the same color as that of the lead or that of the synthetic wood material.

12. The writing or coloring pencil according to any of claims 1 to 11, **characterized in that** the styrene polymer of the synthetic wood material is polystyrene.

13. The writing or coloring pencil according to any of claims 1 to 12, **characterized in that** it is a graphite pencil and **in that** the lead comprises graphite.

14. The writing or coloring pencil according to any of claims 1 to 12, **characterized in that** it is a colored pencil.

15. The writing or coloring pencil according to any of claims 1 to 14, **characterized in that** it comprises an additional decorative layer, advantageously of lacquer, which surrounds, advantageously concentrically, the synthetic wood material.
